# EUROPEAN PATENT APPLICATION

(11) **EP 4 753 122 A1**
(43) Date of publication of application: **03.06.2026**
(21) Application number: 25835170.9
(22) Date of filing: 09.09.2025
(51) Int. Cl.: H02K 7/116, H02K 11/30, H02K 5/124, H02K 5/16, H02K 5/18, H02K 11/21

(54) **INTEGRATED DRIVE SYSTEM FOR ELECTRIC MOTORCYCLE**

(30) Priority: 23.09.2024 CN 202411325725
(71) Applicant: Zhejiang Xin Precision Machinery Co., Ltd., Jiaojiang District Taizhou, Zhejiang 318099 (CN)
(72) Inventor: YU, Wenyong, Taizhou, Zhejiang 318000 (CN); YANG, Changyun, Taizhou, Zhejiang 318000 (CN)
(74) Representative: Metida
(86) International application number: PCT/CN2025/120051
(87) International publication number: WO 2026/061284

(57) **Abstract**

Disclosed is an integrated electric motorcycle drive system, including a motor housing. A controller, a motor, and a reducer are disposed in the motor housing. The controller and the reducer are located at two ends of the motor, respectively. By deeply integrating independent subsystems together, inherent drawbacks of traditional electric motorcycle drive systems are resolved. The integrated electric motorcycle drive system has advantages such as high power density, low noise, minimal torque fluctuation, and flexible configuration, and meets market requirements.

## Description

### Technical Field

The present invention belongs to the technical field of electric motorcycle drive, and more specifically relates to an integrated electric motorcycle drive system.

### Background

With the widespread application of new technologies, user demands for electric motorcycles are increasing. Traditional electric motorcycle drive systems typically adopt a two-in-one structure consisting of either a controller and a motor, or a motor and a reducer, and a drive manner of a parallel-axis gear reduction mechanism is used. These subsystems are interconnected mechanically and electrically while remaining independent from each other, which inevitably leads to inherent drawbacks such as large size, high cost, and low reliability.

### Summary

In view of the deficiencies of the prior art, the present invention provides an integrated electric motorcycle drive system, which has advantages such as high power density, low noise, minimal torque fluctuation, and flexible configuration, thereby meeting market requirements.

To achieve the foregoing objectives, the present invention provides the following technical solutions. An integrated electric motorcycle drive system includes a motor housing. A controller, a motor, and a reducer are disposed in the motor housing. The controller and the reducer are located at two ends of the motor, respectively.

Further, a motor end cover is disposed at a rear end of the motor housing, and a motor bearing mounting plate is disposed inside the motor housing. The motor housing, the motor end cover, and the motor bearing mounting plate form a sealed control chamber, and the controller is located in the control chamber. The motor bearing mounting plate is rotatably connected to a main shaft of the motor, and a bearing is disposed between the main shaft of the motor and the motor bearing mounting plate. The motor and the controller are electrically connected via wires, and the wires pass through the motor bearing mounting plate.

Further, the controller includes an electrical control module, an adapter base, and an encoder. Leads of the motor pass through the motor bearing mounting plate and are connected to the adapter base. The adapter base is electrically connected to the electrical control module, and the electrical control module is connected to the motor end cover. The adapter base is connected to the motor bearing mounting plate, and the encoder is connected to the motor bearing mounting plate and is located at a rear end of the main shaft of the motor.

Further, a reducer end cover is disposed at a front end of the motor housing, a reduction chamber is formed between the reducer end cover and the motor housing, and a reduction gear pair is disposed in the reduction chamber.

Further, the reduction gear pair includes a central gear, a plurality of planetary gears, and an internal gear ring. The central gear is connected to the main shaft of the motor, and the internal gear ring is fixedly connected to an inner wall of the motor housing. Both sides of the planetary gears mesh with the central gear and the internal gear ring, respectively. An output shaft is disposed on the reducer end cover, and a planetary carrier is disposed on the output shaft. The planetary carrier is connected to the plurality of planetary gears, and bearings are disposed between the planetary gears and the planetary carrier.

Further, the main shaft of the motor, the output shaft, and the internal gear ring are coaxially arranged.

Further, a plurality of heat dissipation fins are disposed on the outer side of the motor end cover.

Compared with the prior art, the present invention has the following beneficial effects. By deeply integrating independent subsystems together, the drive system of the present invention overcomes the inherent drawbacks of traditional electric motorcycle drive systems, has advantages such as high reduction ratio, strong load capacity, and flexible configuration, and meets market requirements. The controller is integrated at a left end of the motor through an appropriately designed structure form. The reducer is of a planetary gear type. The motor housing is an integrated structure including a controller chamber, a motor chamber, and a reducer chamber, thereby forming a deeply integrated and unified electric motorcycle drive system.

### Brief Description of Figures

Fig. 1 is a schematic diagram of an internal structure of an integrated electric motorcycle drive system according to the present invention;
Fig. 2 is a schematic structural diagram of a controller at a rear end of a motor housing in an integrated electric motorcycle drive system according to the present invention; and
Fig. 3 is a schematic structural diagram of a reducer at a front end of a motor housing in an integrated electric motorcycle drive system according to the present invention.

Reference numerals: 1, motor housing; 2, controller; 3, motor; 4, reducer; 5, motor end cover; 6, motor bearing mounting plate; 7, control chamber; 8, electrical control module; 9, adapter base; 10, encoder; 11, reducer end cover; 12, reduction chamber; 13, motor chamber; 14, bearing seat; 15, oil seal; 16, central gear; 17, planetary gear; 18, internal gear ring; 19, planetary carrier; 20, output shaft; 21, connecting shaft; and 22, heat dissipation fin.

### Detailed Description

In the description of the present invention, it is to be noted that orientation-related terms such as "center", "transverse (X)", "longitudinal (Y)", "vertical (Z)", "length", "width", "thickness", "upper", "lower", "front", "rear", "left", "right", "upright", "horizontal", "top", "bottom", "inner", "outer", "clockwise", and "counterclockwise" are used to indicate orientations and positional relationships based on the orientations and positional relationships shown in the accompanying drawings. These terms are used solely to facilitate the description of the present invention and simplify the description, and are not intended to indicate or imply that the referred apparatus or elements must have a particular orientation or be constructed and operated in a particular orientation. These terms should not be construed as limiting a specific scope of protection of the present invention.

Furthermore, terms such as "first" and "second" are used for descriptive purposes only and should not be interpreted as indicating or implying relative importance or implicitly specifying the quantity of technical features. Thus, features defined by "first" or "second" may explicitly or implicitly include one or more of such features. In the description of the present invention, the term "a number of" or "a plurality of" means two or more, unless explicitly defined otherwise.

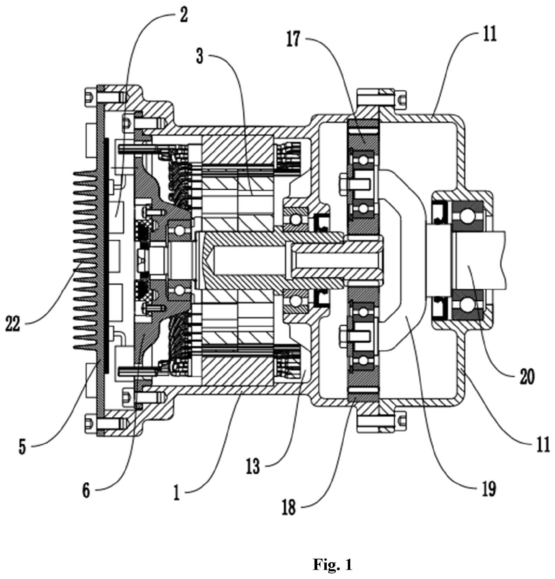

The present invention will be further described with reference to Fig. 1 to Fig. 3.

An integrated electric motorcycle drive system includes a motor housing 1. A controller 2, a motor 3, and a reducer 4 are disposed in the motor housing 1. The controller 2 and the reducer 4 are located at two ends of the motor 3, respectively.

As shown in Fig. 1, in this preferred example, a motor end cover 5 is disposed at a rear end of the motor housing 1, and a motor bearing mounting plate 6 is disposed inside the motor housing 1. The motor housing 1, the motor end cover 5, and the motor bearing mounting plate 6 form a sealed control chamber 7, and the controller 2 is located in the control chamber 7. The motor bearing mounting plate 6 is rotatably connected to a main shaft of the motor 3, and a bearing is disposed between the main shaft of the motor 3 and the motor bearing mounting plate 6. The motor 3 and the controller 2 are electrically connected via wires, and the wires pass through the motor bearing mounting plate 6.

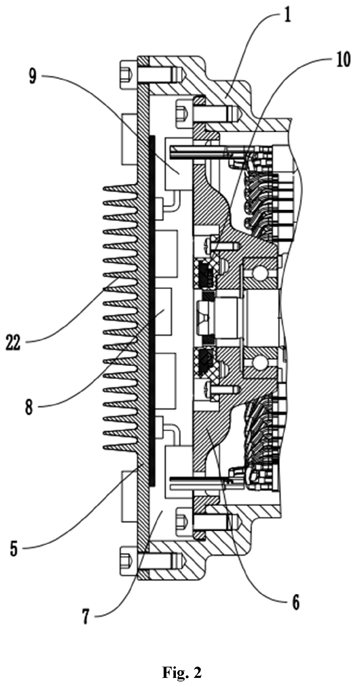

As shown in Fig. 2, in this preferred example, the controller 2 includes an electrical control module 8, an adapter base 9, and an encoder 10. Leads of the motor 3 pass through the motor bearing mounting plate 6 and are connected to the adapter base 9. The adapter base 9 is electrically connected to the electrical control module 8, and the electrical control module 8 is connected to the motor end cover 5. The adapter base 9 is connected to the motor bearing mounting plate 6, and the encoder 10 is connected to the motor bearing mounting plate 6 and is located at a rear end of the main shaft of the motor 3.

Specifically, the electrical control module 8 includes a printed circuit board (PCB), power components, filters, and electrical elements such as connectors symmetrically arranged on both sides.

Specifically, the PCB of the electrical control module 8 is attached to the motor end cover 5 by using a thermal adhesive and is secured by screws.

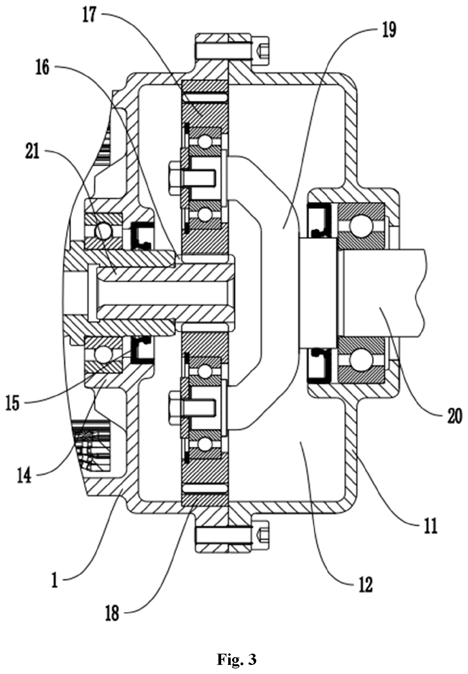

As shown in Fig. 3, in this preferred example, a reducer end cover 11 is disposed at a front end of the motor housing 1, a reduction chamber 12 is formed between the reducer end cover 11 and the motor housing 1, and a reduction gear pair is disposed in the reduction chamber 12, to achieve reduced output speed and increased torque.

As shown in Fig. 1 and Fig. 3, specifically, a motor chamber 13 is disposed in the motor housing 1, and the motor 3 is located in the motor chamber 13. A bearing seat 14 is disposed between the motor chamber 13 and the reduction chamber 12. The main shaft of the motor 3 passes through the bearing seat 14, and an oil seal 15 is disposed between the main shaft of the motor 3 and the bearing seat 14.

As shown in Fig. 3, in this preferred example, the reduction gear pair includes a central gear 16, a plurality of planetary gears 17, and an internal gear ring 18. The central gear 16 is connected to the main shaft of the motor 3, and the internal gear ring 18 is fixedly connected to an inner wall of the motor housing 1. Both sides of the planetary gears 17 mesh with the central gear 16 and the internal gear ring 18, respectively. An output shaft 20 is disposed on the reducer end cover 11, and a planetary carrier 19 is disposed on the output shaft 20. The planetary carrier 19 is connected to the plurality of planetary gears 17, and bearings are disposed between the planetary gears 17 and the planetary carrier 19.

As shown in Fig. 3, in this preferred example, the main shaft of the motor 3, the output shaft 20, and the internal gear ring 18 are coaxially arranged.

As shown in Fig. 3, specifically, a connecting shaft 21 is disposed on the main shaft of the motor 3, and the central gear 16 is located on the connecting shaft 21.

As shown in Fig. 2, in this preferred example, a plurality of heat dissipation fins 22 are disposed on the outer side of the motor end cover 5, to improve the heat dissipation efficiency of the electrical control module 8.

In this preferred example, the motor 3 is a six-phase permanent magnet synchronous motor 3 having a flat-wire structure, or may be a motor 3 having another structure.

By deeply integrating independent subsystems together, the drive system of the present invention overcomes the inherent drawbacks of traditional electric motorcycle drive systems, has advantages such as high reduction ratio, strong load capacity, and flexible configuration, and meets market requirements. The controller 2 is integrated at a left end of the motor 3 through an appropriately designed structure form. The reducer 4 adopts the planetary gear 17. The motor 3 housing is an integrated structure including a controller 2 chamber, a motor chamber 13, and a reducer 4 chamber, thereby forming a deeply integrated electric motorcycle drive system.

The above description presents only preferred embodiments of the present invention, and the scope of protection of the present invention is not limited to the foregoing embodiments. All technical solutions falling within the idea of the present invention shall be considered within the scope of protection of the present invention. It is to be noted that those of ordinary skill in the art may make various modifications and refinements without departing from the principles of the present invention. Such modifications and refinements should also be regarded as falling within the scope of protection of the present invention.

## Claims

1. An integrated electric motorcycle drive system, comprising a motor housing, wherein a controller, a motor, and a reducer are disposed in the motor housing, and the controller and the reducer are located at two ends of the motor, respectively.

2. The integrated electric motorcycle drive system according to claim 1, wherein a motor end cover is disposed at a rear end of the motor housing, and a motor bearing mounting plate is disposed inside the motor housing; the motor housing, the motor end cover, and the motor bearing mounting plate form a sealed control chamber, and the controller is located in the control chamber; the motor bearing mounting plate is rotatably connected to a main shaft of the motor, and a bearing is disposed between the main shaft of the motor and the motor bearing mounting plate; and the motor and the controller are electrically connected via wires, and the wires pass through the motor bearing mounting plate.

3. The integrated electric motorcycle drive system according to claim 2, wherein the controller comprises an electrical control module, an adapter base, and an encoder; leads of the motor pass through the motor bearing mounting plate and are connected to the adapter base; the adapter base is electrically connected to the electrical control module, and the electrical control module is connected to the motor end cover; and the adapter base is connected to the motor bearing mounting plate, and the encoder is connected to the motor bearing mounting plate and is located at a rear end of the main shaft of the motor.

4. The integrated electric motorcycle drive system according to claim 1, wherein a reducer end cover is disposed at a front end of the motor housing, a reduction chamber is formed between the reducer end cover and the motor housing, and a reduction gear pair is disposed in the reduction chamber.

5. The integrated electric motorcycle drive system according to claim 4, wherein the reduction gear pair comprises a central gear, a plurality of planetary gears, and an internal gear ring; the central gear is connected to the main shaft of the motor, and the internal gear ring is fixedly connected to an inner wall of the motor housing; both sides of the planetary gears mesh with the central gear and the internal gear ring, respectively; an output shaft is disposed on the reducer end cover, and a planetary carrier is disposed on the output shaft; and the planetary carrier is connected to the plurality of planetary gears, and bearings are disposed between the planetary gears and the planetary carrier.

6. The integrated electric motorcycle drive system according to claim 5, wherein the main shaft of the motor, the output shaft, and the internal gear ring are coaxially arranged.

7. The integrated electric motorcycle drive system according to claim 2, wherein a plurality of heat dissipation fins are disposed on the outer side of the motor end cover.
